# EUROPÄISCHE PATENTANMELDUNG

(11) **EP 4 488 064 A1**
(43) Veröffentlichungstag der Anmeldung: **08.01.2025**
(21) Anmeldenummer: 24184852.2
(22) Anmeldetag: 27.06.2024
(51) Int. Cl.: B32B 27/08, B32B 7/12, B32B 27/18, B32B 27/30, B32B 27/32, B32B 27/36, B32B 27/40, H01M 10/04

(54) **MEHRSCHICHTIGE VERBUNDSTRUKTUR**

(30) Priorität: 07.07.2023 DE 102023206462
(71) Anmelder: Benecke-Kaliko AG, 30419 Hannover (DE)
(72) Erfinder: Neumann, Thorsten, 30419 Hannover (DE); Schweizer-Berberich, Paul-Markus, 30165 Hannover (DE)
(74) Vertreter: Continental Corporation

(57) **Zusammenfassung**

Die Erfindung betrifft eine mehrschichtige Verbundstruktur (1) mit einer einlagigen oder mehrlagigen Oberschicht (2) und einer einlagigen oder mehrlagigen Unterschicht (4), wobei zwischen der Oberschicht (2) und der Unterschicht (4) wenigstens eine polymere Zwischenschicht (6) angeordnet ist. In der polymeren Zwischenschicht (6) ist eine Anordnung (7) aus einem ersten Leiter (10), und wenigstens einer Anode (8), und wenigstens einem Separator (16) und wenigstens einer Kathode (12), und einem zweiten Leiter (14) angeordnet, wobei die wenigstens eine Anode (8) in elektrisch leitfähigem Kontakt mit dem ersten Leiter (10) steht, und wobei die wenigstens eine Kathode (12) in elektrisch leitfähigem Kontakt mit dem zweiten Leiter (14) steht. Der Separator (16) ist als eine Trennschicht zwischen der Anode (8) und der Kathode (12) angeordnet, wobei der erste Leiter (10) und der zweite Leiter (14) zumindest abschnittsweise seitlich aus der Verbundstruktur (1) herausragen, um elektrisch kontaktierbar zu sein.

## Beschreibung

Die Erfindung betrifft eine mehrschichtige Verbundstruktur mit einer einlagigen oder mehrlagigen Oberschicht und einer einlagigen oder mehrlagigen Unterschicht, wobei zwischen der Oberschicht und der Unterschicht wenigstens eine polymere Zwischenschicht angeordnet ist. Weiterhin betrifft die Erfindung ein Verkleidungselement gemäß Anspruch 10.

Für dekorative Oberflächen in Innenräumen von Immobilien oder Fahrzeugen sind verschiedenste einschichtige oder mehrschichtige Verbundmaterialien aus polymerem Material bekannt, beispielsweise auf Basis von Polyurethan oder Polyvinylchlorid. Kaschiert mit einem textilen Träger werden derartige Verbundmaterialien vornehmlich in Form eines Kunstleders mit einer genarbten Oberflächenstruktur großflächig als Bezugsmaterial für Sitze, Möbel oder als Verkleidungselement für Wände oder Decken eingesetzt. Die DE 10 2020 203 972 A1 offenbart beispielsweise ein Kunstleder mit selbstheilenden Eigenschaften, wobei Risse oder Brüche reversibel zurückgebildet werden können. Durch eine Temperaturerhöhung unterhalb des Schmelzpunktes kann ein Zusammenfügen der Grenzflächen des Risses begünstigt werden. Derartige Kunstleder werden häufig großflächig zur dekorativen Verkleidung von sichtbaren Oberflächen verwendet. Nachteiliger Weise steht der Wunsch, einer sichtbaren Oberfläche optisch und haptisch ansprechende Eigenschaften zu verleihen, häufig in Konflikt mit einer weiteren Verwendung der Oberfläche z. B. als ein Stromspeicher, was den optischen Eindruck der Oberfläche durch Anbringung der hierfür erforderlichen technischen Einrichtungen nachteilig beeinflussen würde.

So sind aus dem Stand der Technik verschiedene Ausführungsformen von Stromspeichern in Form von Batterien oder Akkumulatoren oder Kondensatoren bekannt. Ein Akkumulator beschreibt eine wiederaufladbare Batterie. Ein Stromspeicher kann ein elektrochemischer Energiespeicher sein, wobei bei einer Entladung die gespeicherte chemische Energie in elektrische Energie umgewandelt wird. Auf diese Weise können elektrische Geräte unabhängig von einem Stromnetz betrieben werden. Zudem können Stromspeicher zur Stabilisierung von Stromnetzen dienen und als sogenannte Netzpuffer Stromspitzen ausgleichen bzw. elektrische Energie in ausreichendem Maße bereitstellen, wenn z.B. aufgrund meteorologischer Bedingungen nicht ausreichend Wind- und bzw. oder Sonnenenergie zur Stromerzeugung zur Verfügung steht.

Beispielsweise sind Stromspeicher bei Solaranlagen in Haushaltsanwendungen erforderlich, um bedarfsgerecht Energie z. B. für das Laden eines Elektrofahrzeugs bereitstellen zu können. Für Stromspeicher mit einer Speicherkapazität von mehreren Kilowattstunden ist ein nennenswerter Bauraumbedarf erforderlich. Die effektive Nutzfläche eines Hauses kann sich so verkleinern, was insbesondere bei einer effizienten Wohnraumplanung nachteilig ist. Durch die als nachteilig empfundene optische Erscheinung und die großvolumigen geometrischen Abmessungen der bekannten Stromspeicher wird zumeist die Bereitstellung eines separaten Raumes zur Lagerung des Stromspeichers vorgesehen. Die Bereitstellung der zusätzlichen Fläche ist zudem mit hohen Kosten verbunden. Insbesondere in Mehrfamilienhäusern oder städtischen Gebäuden von bis zu mehreren hundert Eigentumswohnungen ist ein Aufstellen eines entsprechenden Akkumulators aus platzgründen nicht möglich, obwohl gerade im urbanen Ballungsraum die Kompensation von Leistungsspitzen durch Puffer eine besonders vorteilhafte Energieeinsparung erreichen kann. Jedoch werden immer häufiger lokal vorhandene Speicherlösungen, beispielsweise zur Speicherung von Energie von Balkonkraftwerken oder vergünstigtem Nachtstrom nachgefragt.

Es besteht daher schon länger die Anforderung, dass Stromspeicher möglichst wenig Bauraum einnehmen sollen und trotz kompakter Bauform vergleichsweise große Mengen an Energie speichern können. Entscheidend dabei ist, dass Stromspeicher trotz kompakter Bauform eine hohe Sicherheit gegen Kurzschlüsse bieten, d.h. gegen eine physische, spannungsentladende Verbindung zwischen den zwei Polen einer Zelle. Die EP 2 706 592 B1 betrifft beispielsweise eine Batterie, wobei die Schichten mit Anodenmaterial bzw. Kathodenmaterial und die Trennschichten nacheinander in einem Stapelaufbau geschichtet sind. Jedoch erfüllt die aus der EP 2 706 592 B1 bekannte Batterie weiterhin nicht die optischen und haptischen Anforderungen einer sichtbaren dekorativen Oberfläche.

Der Erfindung liegt die Aufgabe zugrunde, eine mehrschichtige Verbundstruktur bereitzustellen, welche ausgebildet ist, elektrische Energie aufzunehmen und bzw. oder zu speichern und bzw. oder abzugeben. Die mehrschichtige Verbundstruktur soll großflächig und platzsparend bestehende Oberflächen, insbesondere Oberflächen im Innenraum von Immobilien, verkleiden. Zusätzlich oder alternativ soll die mehrschichtige Verbundstruktur ein Heizelement mit einem verbesserten Wirkungsgrad bereitstellen.

Die Lösung dieser Aufgabe ergibt sich durch eine mehrschichtige Verbundstruktur mit den Merkmalen des unabhängigen Anspruchs 1.

Weitere vorteilhafte Ausbildungen sind in den abhängigen Ansprüchen offenbart. Anspruch 10 offenbart ein Verkleidungselement mit einer erfindungsgemäßen mehrschichtigen Verbundstruktur.

Weitere Vorteile und Merkmale sind der allgemeinen Beschreibung sowie den Ausführungsbeispielen zu entnehmen.

Die vorliegende Anmeldung betrifft eine mehrschichtige Verbundstruktur mit einer einlagigen oder mehrlagigen Oberschicht und einer einlagigen oder mehrlagigen Unterschicht, wobei zwischen der Oberschicht und der Unterschicht wenigstens eine polymere Zwischenschicht angeordnet ist. In der polymeren Zwischenschicht ist eine Anordnung aus einem ersten Leiter, und wenigstens einer Anode, und wenigstens einem Separator und wenigstens einer Kathode, und einem zweiten Leiter angeordnet. Die wenigstens eine Anode steht in elektrisch leitfähigem Kontakt mit dem ersten Leiter. Außerdem steht die wenigstens eine Kathode in elektrisch leitfähigem Kontakt mit dem zweiten Leiter. Der Separator ist als eine Trennschicht zwischen der Anode und der Kathode angeordnet, wobei der erste Leiter und der zweite Leiter zumindest abschnittsweise seitlich aus der Verbundstruktur herausragen, um elektrisch kontaktierbar zu sein.

Der erste Leiter und der zweite Leiter können z. B. mit einer Spannungsquelle elektrisch kontaktiert werden. Die negative Elektrode bildet bei Verbindung mit einer Spannungsquelle die Kathode, während gleichzeitig die positive Elektrode die Anode bildet. Der Separator bildet eine räumliche und elektrische Trennschicht zwischen den zwei Elektroden. Der Separator ist dabei durchlässig für Ionen. Der Separator kann in seiner einfachsten Ausführungsform ein poröses Material aufweisen, welches in einer Elektrolytlösung für die lonenleitung getränkt sein kann. Vorteilhaft kann der Separator und die Elektrolytlösung durch einen Feststoffelektrolyten ersetzt werden, der aus einem polymeren, oxidischen oder sulfidischen Feststoffionenleiter gebildet sein kann.

Beispiele für Polymerelektrolyte sind Polyethylenoxid, Polyacrylnitrile, Polyimide, Polystyrol oder Polycaprolactone, davon Blockcopolymere und bzw. oder funktionalisierte Varianten. Durch Zusatz von Lithiumleitsalzen kann die Leitfähigkeit des Polymerelektrolyts gesteigert werden.

Beispiele für sulfidische Elektrolyte sind Thiophosphate wie z. B. Li₃PS₄, Li₇SiPS₈ oder Argyrodite wie z. B. Li₆PS₅Cl.

Beispiele für oxidische Elektrolyte sind Perovskite wie z. B. Li₃ₓLa_{2/3-x}TiO₃ (LLTO), Phosphate wie z. B. Li_{1.3}Al_{0.3}Ti_{1.7}(PO₄)₃ (LATP) oder Garnets wie z. B.Li₇La₃Zr₂O₁₂ (LLZO).

Zusätzlich oder alternativ können der erste und der zweite Leiter mit einem elektrischen Verbraucher kontaktiert sein. Die positive Elektrode bildet bei Verbindung mit einem elektrischen Verbraucher die Kathode, während gleichzeitig die negative Elektrode durch die Anode gebildet wird.

Die Anordnung aus einem ersten Leiter, einer Anode, einem Separator, einer Kathode und einem zweiten Leiter weist typischer Weise eine Schichtdicke von 50 µm bis 500 µm auf. Die Anordnung kann auch mehrere Anoden, Separatoren und Kathoden aufweisen, welche einander alternierend zwischen dem ersten Leiter und dem zweiten Leiter angeordnet sind. Mit steigender Anzahl von Anoden, Separatoren und Kathoden kann eine größere Menge an elektrischer Energie gespeichert werden.

Die Unterschicht kann ein textiles Gestrick, Gewirke oder Gewebe aufweisen und zusätzlich oder alternativ ein geschäumtes polymeres Material aufweisen.

Gemäß einem weiteren Aspekt der vorliegenden Erfindung sind die wenigstens eine Anode, und der wenigstens eine Separator, und die wenigstens eine Kathode in die polymere Zwischenschicht eingebettet. Die polymere Zwischenschicht umschließt die Anode, den Separator und die Kathode, wodurch Anode, Separator und Kathode von Feuchtigkeit der umgebenden Raumluft isoliert werden können. So kann eine Zersetzung, z. B. durch Oxidation der Anode, des Separators und der Kathode vermieden werden.

Gemäß einem weiteren Aspekt der vorliegenden Erfindung ist der Separator mit einem Elektrolyt beschichtbar. Der Elektrolyt kann in flüssiger Form oder als Feststoff-Elektrolyt ausgebildet sein. Insbesondere ein Feststoff-Elektrolyt zeigt sich bei der Verwendung in der erfindungsgemäßen mehrschichtigen Verbundstruktur als besonders vorteilhaft, da der Elektrolyt bei Beschädigung der Verbundstruktur innerhalb der Verbundstruktur verbleibt und keine gesundheitliche Gefahr durch Kontakt mit auslaufenden Substanzen besteht. Ein weiterer Vorteil von Feststoff-Elektrolyten besteht in einer großen Hitzebeständigkeit, sodass die Anordnung direkt mit der Oberschicht in Form einer bis zu 200 °C warmen verflüssigten Paste beschichtet oder unter Wärme mit der Oberschicht verklebt werden kann.

Gemäß einem weiteren Aspekt der vorliegenden Erfindung ist die mehrschichtige Verbundstruktur ein Stromspeicher. Die Anordnung aus dem ersten Leiter, und wenigstens der einen Anode, und wenigstens dem einen Separator und wenigstens der einen Kathode, und einem zweiten Leiter kann einen Stromspeicher, insbesondere einen Akkumulator bilden. Dieser Akkumulator kann eine über die Spannungsquelle geladen werden und die hinzugeführte elektrische Energie speichern. Die gespeicherte elektrische Energie kann an einen oder mehrere elektrische Verbraucher abgegeben werden. Die mehrschichtige Verbundstruktur kann so zeitweise Energie z. B. für den Betrieb einer Lampe oder eines elektrisch betriebenen Haushaltsgeräts bereitstellen. Der Akkumulator wird bei Versorgung von elektrischen Verbrauchern mit elektrischer Energie entladen. Auf vorteilhafte Weise kann die erfindungsgemäße mehrschichtige Verbundstruktur einen Stromspeicher aufweisen, welcher als Verkleidungselement von Oberflächen großflächig und nahezu unauffällig in bestehende Raumkonzepte integrierbar ist. Im Vergleich zu herkömmlichen Akkumulatoren als Stromspeicher in Haushaltsanwendungen kann auf die Bereitstellung einer lokalen Abstellfläche für den Stromspeicher verzichtet werden. Die erfindungsgemäße Lösung eignet sich daher insbesondere für Immobilien mit geringer Fläche, die den Platz zur Bereitstellung herkömmlicher Stromspeicher nicht zur Verfügung stellen können. Die erfindungsgemäße Lösung kann Immobilien somit befähigen, einen Stromspeicher und die damit verbundene Peripherie überhaupt erst integrieren zu können.

Die erfindungsgemäße mehrschichtige Verbundstruktur kann eine elektrische Ladung von 25 Ah/m², bevorzugt 50 Ah/m² und weiter bevorzugt bis zu 100 Ah/m² bereitstellen. Bei Verwendung der Verbundstruktur als beispielsweise Deckenverkleidungselement auf einer Fläche von 80 m² und einer Zellspannung von bis zu 5 Volt kann die erfindungsgemäße Verbundstruktur 10 kWh, bevorzugt 20 KWh und weiter bevorzugt bis zu 40 kWh Energie speichern und optional unabhängig vom Stromnetz bereitstellen.

Gemäß einem weiteren Aspekt der vorliegenden Erfindung ist die mehrschichtige Verbundstruktur ein Heizelement. Auf besonders vorteilhafte Weise kann sich die mehrschichtige Verbundstruktur bei Laden und bzw. oder Entladen der Anordnung erwärmen. Insbesondere kann bei großflächiger Verwendung der erfindungsgemäßen mehrschichtigen Verbundstruktur die beim Laden und bzw. oder Entladen entstehende Abwärme an die Umgebung abgegeben werden. Das mehrschichtige Verbundmaterial kann beispielsweise als Verkleidungselement von Wänden oder Decken in Innenräumen verwendet werden, wodurch sich auf vorteilhafte Weise eine großflächige Wärmeabstrahlung ergeben kann, worüber der Raum gleichmäßig erwärmt werden kann. Durch eine gleichmäßige Wärmeverteilung kann das Wohlempfinden der sich in dem Raum aufhaltenden Personen gesteigert werden. Zudem werden bei großflächiger Wärmeabgabe zur Erwärmung der Umgebungsluft geringere Temperaturen an der Oberfläche der Verbundstruktur von maximal 30°C bis 40°C benötigt, als dies z. B. bei gewöhnlichen Heizkörpern der Fall ist. Lokale Wärmehotspots können durch die erfindungsgemäße mehrschichtige Verbundstruktur vermieden werden.

Gemäß einem weiteren Aspekt der vorliegenden Erfindung weist die Oberschicht ein polymeres Material auf Basis von wenigstens einem Polyvinylchlorid, oder von wenigstens einem Acrylat, oder von wenigstens einem Polyurethan, oder von wenigstens einem thermoplastischen Polyurethan, oder von wenigstens einem Polyolefin, oder von wenigstens einem Polyester, oder von wenigstens einem Polylactid, oder von wenigstens einem Polybutylenadipat-terephthalat, oder von wenigstens einem stärkebasierten Polymer, oder von wenigstens einem Polyethylenfuranoat, oder von wenigstens einem Polyvinylbutyral, oder von wenigstens einem Polyamid, oder von wenigstens einem Silikon (additions- oder kondensationsvernetztend) auf. Das polymere Material kann recycelbar, bioabbaubar oder biobasiert oder CO₂ basiert oder auf fossiler Basis sein und in Abmischungen, Copolymeren oder Blends der oben genannten Materialien eingesetzt werden. Insbesondere Polymere mit selbstheilenden Eigenschaften finden hierbei eine besonders vorteilhafte Anwendung. Die Oberschicht kann mehrlagig aufgebaut sein und zudem eine Narbung und bzw. oder Prägung aufweisen, wodurch der erfindungsgemäßen Verbundstruktur die optische Erscheinung eines Kunstleders verliehen werden kann. Auf vorteilhafte Weise kann die mehrschichtige Verbundstruktur durch ihre optischen und haptischen Eigenschaften als Oberfläche verschiedenster Möbel oder als Verkleidung von Wänden oder Decken von Innenräumen zum Einsatz kommen. Das Kunstleder kann auch ein wie im Stand der Technik beschriebenes selbstheilendes Kunstleder sein, bei dem Beschädigungen in der Oberfläche reversibel in den Ursprungszustand zurückführbar sind.

Neben den oben genannten Polymeren Materialien können unter anderem Flammschutzsystem eingearbeitet werden, welche auf Basis von Phosphaten, Stickstoffverbindungen, Metalloxiden - wie z. B. Antimonoxid, Aluminiumoxiden, Molydänoxid -, Zink-Verbindungen, Borverbindungen und Tonerden basieren.

Gemäß einem weiteren Aspekt der vorliegenden Erfindung weist das polymere Material Diamantpulver, oder Korundstrukturen wie Aluminiumoxide oder Siliciumcarbid, oder Bornitrid als thermisch leitfähigen Zusatz auf. Die Wärmeleitfähigkeit des polymeren Materials bzw. der Oberschicht kann so verbessert werden, wodurch die Abwärme der sich unter der Oberschicht befindlichen Anordnung mit geringen Wärmeverlusten an die Umgebung abgegeben werden kann. Der Wirkungsgrad der mehrschichtigen Verbundstruktur als Heizelement kann so auf vorteilhafte Weise verbessert werden.

Das polymere Material kann auch Pigmente aufweisen, die temperaturabhängig ihre Farbe verändern können. So kann die erfindungsgemäße Verbundstruktur einen optischen Indikator für die Temperatur der Oberschicht aufweisen.

Zusätzlich oder alternativ kann das polymere Material Pigmente aufweisen, die für Wärmestrahlung in einem Infrarot-Wellenlängenbereich von 780 nm bis 1 mm transparent sind. Es zeigt sich als besonders vorteilhaft, dass die Wärme besonders effizient an die Umgebung abgeführt werden kann, ohne die Oberschicht der Verbundstruktur aufheizen zu müssen. Diese werden unter anderem umgangssprachlich auch Cool Color Pigmente genannt.

Gemäß einem weiteren Aspekt der vorliegenden Erfindung weist die Anordnung jeweils fünf Anoden, und fünf Separatoren, und fünf Kathoden auf, welche einander alternierend angeordnet sein können. Mit anderen Worten kann die erfindungsgemäße Verbundstruktur eine Anordnung aufweisen, in der im Wechsel eine Anode, ein Separator und eine Kathode in fünffacher Ausführung schichtweise aufeinander zwischen dem ersten Leiter und dem zweiten Leiter angeordnet sind. Es kann auch eine beidseitig gleich beschichtete Elektrode oder eine bipolar beschichtete Elektrode Grundelement für den Stackaufbau sein. Mit steigender Anzahl von Anoden, Separatoren und Kathoden kann eine größere Menge an elektrischer Energie gespeichert werden. Das Verhältnis von speicherbarer Energiemenge zu der Oberfläche der Verbundstruktur zeigt sich als besonders vorteilhaft, sodass bei einem Kurzschluss eine hinreichend schnelle Wärmeabgabe über die Oberfläche der Verbundstruktur an die Umgebungsluft erfolgen kann. Einer Überhitzung mit der Folge eines Entflammens der Verbundstruktur kann so wirksam vorgebeugt werden.

Gemäß einem weiteren Aspekt der vorliegenden Erfindung weisen der erste Leiter und bzw. oder der zweite Leiter eine Mehrzahl von Kacheln auf, wobei die Kacheln über wenigstens einen Steg miteinander verbunden sind, wobei der zufließende und bzw. oder der abfließende Strom einer Kachel durch den Steg begrenzbar ist. Mit anderen Worten sind die Kacheln des ersten Leiters und bzw. oder die Kacheln des zweiten Leiters untereinander über wenigstens einen Steg miteinander verbunden. Der erste Leiter und der zweite Leiter sind untereinander nicht elektrisch leitfähig verbunden und einander isoliert angeordnet. Die Schichten zwischen den Leitern sind durch den Elektrolyten ionisch verbunden. Das gesamte Kachelelement stellt die elektrochemische Zelle dar.

Mit anderen Worten sind die Kacheln gegeneinander über die Stege geringeren Querschnitts abgesichert. Ein "vertikaler" Kurzschluss in einem Kachelelement kann zu einem erhöhten "horizontalen" Stromfluss von den anderen Kacheln zu der Kachel führen, an welcher der Kurzschluss entstanden ist. Der Innenwiderstand der Stege, welche die kurzgeschlossene Kachel mit den benachbarten Kacheln verbinden, ist aufgrund des geringeren Querschnitts größer als der Innenwiderstand der Kacheln. Ein zu großer Stromfluss führt zu einer Überhitzung der Stege, welche durchbrennen können und so die kurzgeschlossene Kachel von den übrigen Kacheln entkoppeln können, bevor sich die erfindungsgemäße Verbundstruktur in Folge des Kurzschlusses einer oder mehrerer Kacheln entzünden kann. Analog dazu können die Kathode und bzw. oder die Anode zu dem ersten Leiter und bzw. oder zweiten Leiter korrespondierend ebenfalls kachelförmig ausgebildet sein. Die Stege des ersten Leiters und des zweiten Leiters sind vorzugsweise zueinander versetzt angeordnet. Insbesondere bei Verwendung der erfindungsgemäßen Verbundstruktur zur Verkleidung von Wänden zeigt es sich als besonders vorteilhaft, dass z. B. das Einschlagen von Nägeln durch die Verbundstruktur in die Wand zum Aufhängen von Wanddekoration kein Sicherheitsrisiko darstellt.

Die Erfindung betrifft außerdem ein Verkleidungselement mit einer erfindungsgemäßen mehrschichtigen Verbundstruktur. Die Verbundstruktur kann sowohl die Optik als auch die Haptik eines Kunstleders aufweisen und als Verkleidungselement von Möbeloberflächen oder als Verkleidung von Wänden oder Decken von Innenräumen zum Einsatz kommen. Die zuvor genannten Eigenschaften und Vorteile können auf Verkleidungselemente in unterschiedlichsten Anwendungen und Dimensionen übertragen werden.

Es wird ausdrücklich darauf hingewiesen, dass die vorstehend erläuterten Ausgestaltungen der Erfindung jeweils für sich oder in einer beliebigen technisch sinnvollen Kombination auch untereinander jeweils mit dem Gegenstand des Anspruchs 1 und bzw. oder dem unabhängigen Anspruch 10 kombinierbar sind.

Anhand der Figuren werden im Folgenden Ausführungsbeispiele der Erfindung schematisch dargestellt und näher erläutert.
Fig. 1 zeigt eine schematische Darstellung der erfindungsgemäßen mehrschichtigen Verbundstruktur gemäß eines ersten Ausführungsbeispiels in einer Schnittdarstellung.
Fig.2 zeigt eine schematische Darstellung des ersten Leiters oder des zweiten Leiters gemäß eines weiteren Ausführungsbeispiels in einer Draufsicht.

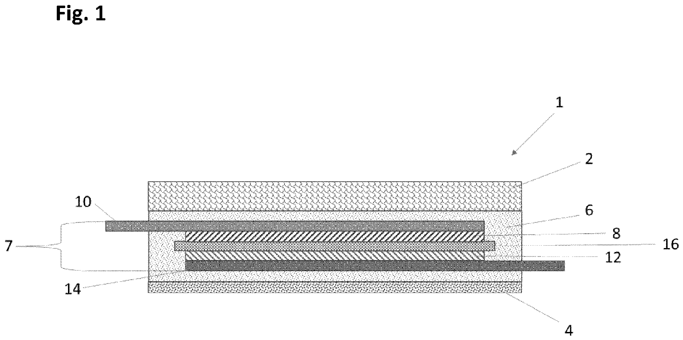

Eine erfindungsgemäße mehrschichtige Verbundstruktur 1 gemäß Figur 1 umfasst eine Oberschicht 2 und eine Unterschicht 4. Zwischen der Oberschicht 2 und der Unterschicht 4 ist eine polymere Zwischenschicht 6 angeordnet. In der polymeren Zwischenschicht 6 ist eine Anordnung 7 aus einem ersten Leiter 10, einer Anode 8, einem Separator 16, einer Kathode 12 und einem zweiten Leiter 14 angeordnet. Die Anode 8, der Separator 16 und die Kathode 12 sind in die polymere Zwischenschicht 6 eingebettet und so von Feuchtigkeit aus der Umgebungsluft isoliert, wodurch einer Korrosion der Komponenten vorgebeugt wird. Der erste Leiter 10 und der zweite Leiter 14 ragen zumindest abschnittsweise seitlich aus der Verbundstruktur 1 heraus und sind von außerhalb der Verbundstruktur 1 elektrisch kontaktierbar. Die Anode 8 steht in elektrisch leitfähigem Kontakt mit dem ersten Leiter 10, während die Kathode 12 in elektrisch leitfähigem Kontakt mit dem zweiten Leiter 14 steht. Der Separator 16 ist als eine Trennschicht zwischen der Anode 8 und der Kathode 12 angeordnet.

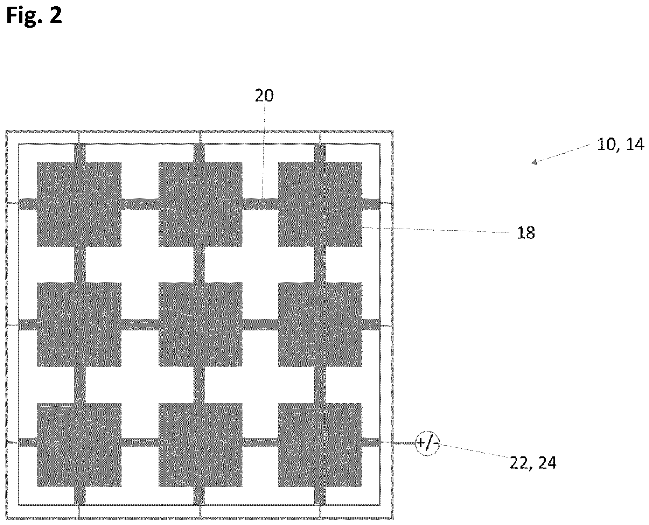

Fig.2 zeigt eine schematische Darstellung des ersten Leiters 10 oder des zweiten Leiters 14 in einer Draufsicht. Der Leiter 10, 14 weist in dem dargestellten Ausführungsbeispiel neun Kacheln 18 auf, wobei die Kacheln 18 untereinander über Stege 20 miteinander verbunden sind. Der Leiter 10, 14 ist außerhalb der Verbundstruktur 1 mit einem Pluspol oder einem Minuspol einer Spannungsquelle 22 und bzw. oder einem elektrischen Verbraucher 24 kontaktiert. Über den Steg 20 fließt ein Strom zwischen zwei benachbarten Kacheln 18. Die Stege 20 weisen einen geringeren Querschnitt als die Kacheln 18 auf, wodurch der Innenwiderstand der Stege 20 größer ist als der Innenwiderstand der Kacheln 18. So wird der zufließende und bzw. oder der abfließende Strom der Kachel 18 durch den Steg 20 begrenzt, wodurch die Kacheln 18 gegeneinander über die Stege 20 abgesichert sind. Ein Kurzschluss führt zu einem erhöhten Stromfluss über den Steg 20 zu der kurz geschlossenen Kachel 18. Ein zu großer Stromfluss führt aufgrund des im Vergleich zu der Kachel 18 größeren Innenwiderstands des Stegs 20 zu einer Überhitzung des Stegs 20, der infolgedessen durchbrennt und so die kurzgeschlossene Kachel 18 von den übrigen Kacheln 18 entkoppelt.

### Bezugszeichenliste (Teil der Beschreibung)

- 1: Verbundstruktur
- 2: Oberschicht
- 4: Unterschicht
- 6: Zwischenschicht
- 7: Anordnung
- 8: Anode
- 10: Erster Leiter
- 12: Kathode
- 14: Zweiter Leiter
- 16: Separator
- 18: Kachel
- 20: Steg
- 22: Spannungsquelle
- 24: Elektrischer Verbraucher

## Patentansprüche

1. Mehrschichtige Verbundstruktur (1) mit einer einlagigen oder mehrlagigen Oberschicht (2) und einer einlagigen oder mehrlagigen Unterschicht (4), wobei zwischen der Oberschicht (2) und der Unterschicht (4) wenigstens eine polymere Zwischenschicht (6) angeordnet ist,
**dadurch gekennzeichnet, dass**
in der polymeren Zwischenschicht (6) eine Anordnung (7) aus einem ersten Leiter (10), und wenigstens einer Anode (8), und wenigstens einem Separator (16) und wenigstens einer Kathode (12), und einem zweiten Leiter (14) angeordnet ist,
wobei die wenigstens eine Anode (8) in elektrisch leitfähigem Kontakt mit dem ersten Leiter (10) steht,
und wobei die wenigstens eine Kathode (12) in elektrisch leitfähigem Kontakt mit dem zweiten Leiter (14) steht,
und wobei der Separator (16) als eine Trennschicht zwischen der Anode (8) und der Kathode (12) angeordnet ist,
wobei der erste Leiter (10) und der zweite Leiter (14) zumindest abschnittsweise seitlich aus der Verbundstruktur (1) herausragen, um elektrisch kontaktierbar zu sein.

2. Mehrschichtige Verbundstruktur (1) nach Anspruch 1,
**dadurch gekennzeichnet, dass**
die wenigstens eine Anode (8), und der wenigstens eine Separator (16), und
die wenigstens eine Kathode (12) in die polymere Zwischenschicht (6) eingebettet sind.

3. Mehrschichtige Verbundstruktur (1) nach einem der vorhergehenden Ansprüche,
**dadurch gekennzeichnet, dass**
der Separator (16) mit einem Elektrolyt beschichtbar ist.

4. Mehrschichtige Verbundstruktur (1) nach einem der vorhergehenden Ansprüche,
**dadurch gekennzeichnet, dass**
die mehrschichtige Verbundstruktur (1) ein Stromspeicher ist.

5. Mehrschichtige Verbundstruktur (1) nach einem der Ansprüche 1 bis 3,
**dadurch gekennzeichnet, dass**
die mehrschichtige Verbundstruktur (1) ein Heizelement ist.

6. Mehrschichtige Verbundstruktur (1) nach einem der vorhergehenden Ansprüche,
**dadurch gekennzeichnet, dass**
die Oberschicht (2) ein polymeres Material auf Basis von wenigstens einem Polyvinylchlorid, oder von wenigstens einem Acrylat, oder von wenigstens
einem Polyurethan, oder von wenigstens einem thermoplastischen Polyurethan, oder von wenigstens einem Polyolefin, oder von wenigstens
einem Polyester, oder von wenigstens einem Polylactid, oder von wenigstens einem Polybutylenadipat-terephthalat, oder von wenigstens
einem stärkebasierten Polymer, oder von wenigstens einem Polyethylenfuranoat, oder von wenigstens einem Polyvinylbutyral aufweist.

7. Mehrschichtige Verbundstruktur (1) nach Anspruch 6,
**dadurch gekennzeichnet, dass**
das polymere Material Diamantpulver, oder Siliciumcarbid, oder Bornitrid oder Aluminiumoxid als thermisch leitfähigen Zusatz aufweist.

8. Mehrschichtige Verbundstruktur (1) nach einem der vorhergehenden Ansprüche,
**dadurch gekennzeichnet, dass**
die Anordnung (7) jeweils fünf Anoden (8), und fünf Separatoren (16), und fünf Kathoden (12) aufweist.

9. Mehrschichtige Verbundstruktur (1) nach einem der vorhergehenden Ansprüche,
**dadurch gekennzeichnet, dass**
der erste Leiter (10) und/oder der zweite Leiter (14) eine Mehrzahl von Kacheln (18) aufweisen, wobei die Kacheln (18) über wenigstens einen Steg (20) miteinander verbunden sind, wobei der zufließende und/oder der abfließende Strom einer Kachel (18) durch den Steg (20) begrenzbar ist.

10. Verkleidungselement mit einer mehrschichtigen Verbundstruktur (1) nach einem der vorhergehenden Ansprüche.
